(19) Europäisches Patentamt
European Patent Office
Office européen des brevets

(11) EP 4 756 966 A1

(12) # EUROPEAN PATENT APPLICATION
published in accordance with Art. 153(4) EPC

(43) Date of publication:
**10.06.2026 Bulletin 2026/24**

(21) Application number: **24878901.8**

(22) Date of filing: **11.10.2024**

(51) International Patent Classification (IPC):
***H01M 10/0568*** *(2010.01)* ***H01M 10/0525*** *(2010.01)*

(52) Cooperative Patent Classification (CPC):
Y02E 60/10

(86) International application number:
**PCT/CN2024/124147**

(87) International publication number:
**WO 2025/082257 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023 CN 202311345453**

(71) Applicants:
- **REPT BATTERO Energy Co., Ltd.**
  **Wenzhou, Zhejiang 325000 (CN)**
- **Shanghai Ruipu Energy Co., Ltd.**
  **Shanghai 201206 (CN)**

(72) Inventors:
- **CAO, Hui**
  **Wenzhou, Zhejiang 325000 (CN)**
- **CUI, Yi**
  **Shanghai 201206 (CN)**
- **HOU, Min**
  **Shanghai 201206 (CN)**
- **LIU, Chan**
  **Shanghai 201206 (CN)**

(74) Representative: **Vitina, Maruta et al**
**Agency Tria Robit**
**Vilandes iela 5-2**
**1010 Riga (LV)**

(54) **SECONDARY BATTERY ELECTROLYTE AND BATTERY THEREOF**

(57) A secondary battery electrolyte, which includes a composite electrolyte salt; the composite electrolyte salt comprises lithium hexafluorophosphate, lithium difluorosulfonate, and lithium sulfide salts; the lithium sulfide salts include substituted sulfates ($R_1$-$SO_3$-Li) and/or sulfonate structure lithium salts ($R_2$-O-$SO_3$-Li). $LiPF_6$, lithium sulfide salts, and LiFSI, are matched and used together. LiFSI exhibits better hydrolysis stability, superior thermal stability, and higher lithium migration capability, significantly enhancing the battery's kinetics and high-temperature performance. Lithium sulfates and sulfonate structure lithium salts also possess high lithium migration capabilities. Moreover, their anion groups rich in S and O form films that improve the composition of the SEI film and reduce membrane impedance, thereby enhancing the battery's kinetic and high-temperature performance.

EP 4 756 966 A1

## Description

### TECHNICAL FIELD

The present invention belongs to the field of batteries, and specifically involves a secondary battery electrolyte and its battery.

### BACKGROUND TECHNOLOGY

As the extensive use of fossil fuels increasingly puts pressure on the environment, new energy technologies have received unprecedented attention and development. Secondary batteries, due to their high energy density, long service life, and no memory effect, are widely applied in the new energy sector. Customers are placing higher demands on the long-term reliability and high energy density of batteries, leading to continuous improvements and upgrades in the material design of secondary batteries.

Therefore, to meet the demand for improving the overall performance of secondary batteries, it is necessary to provide a secondary battery with excellent comprehensive performance. In batteries, the electrolyte plays a crucial role in transporting lithium ions, often referred to as the blood of the battery. The effective combination of lithium salts in the electrolyte can significantly enhance the battery's kinetic capabilities and improve its high-temperature performance.

### SUMMARY OF THE INVENTION

The purpose of the present invention is to provide a secondary battery electrolyte and its battery for solving the problems existing in the prior art. The purpose of the present invention can be achieved by the following scheme:
The present invention provides a secondary battery electrolyte, which includes a composite electrolyte salt. The composite electrolyte salt comprises lithium hexafluorophosphate ($LiPF_6$), lithium difluorosulfonyl imide (LiFSI), and a lithium salt of a chalcogenide; the lithium salt of the chalcogenide comprises substituted sulfates ($R_1$-$SO_3$-Li) and/or sulfonate structure lithium salts ($R_2$-O-$SO_3$-Li).

The structure of the sulfate ($R_1$-$SO_3$-Li) is shown in formula 1, and $R_1$ includes one of alkyl, haloalkyl, hydroxyl, carboxyl, aldehyde, hydroxyethyl, carbonyl, aryl, benzyl, pyrazolyl and imidazolyl.

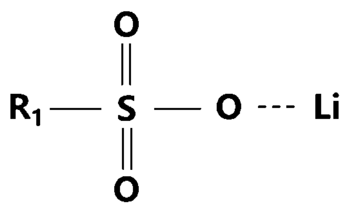

Formula 1

The structure of sulfonate lithium salt ($R_2$-O-$SO_3$-Li) is shown in formula 2, and $R_2$ includes one of alkyl, unsaturated ethyl to hexyl, halogenated alkyl, hydroxyl, carboxyl, aldehyde, hydroxyethyl, carbonyl, aryl, benzyl, pyrazolyl, imidazole, etc.

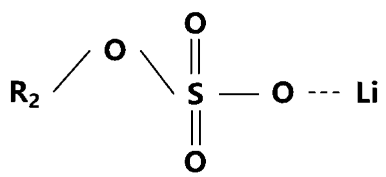

Formula 2

As one embodiment of the present invention, the alkyl in the sulfate ($R_1$-$SO_3$-Li) structure is substituted with methyl, ethyl, propyl, butyl, pentyl, hexyl, heptyl, octyl, nonyl or decyl.

As one embodiment of the present invention, the halogenated alkyl group in the structure formula of sulfate ($R_1$-$SO_3$-Li) is replaced by a fluorinated alkyl group.

As one embodiment of the present invention, in the structure formula of sulfonate structure lithium salt ($R_2$-O-$SO_3$-Li), the alkyl group includes methyl, ethyl, propyl, butyl, pentyl, hexyl, heptyl, octyl, nonyl or decyl.

As one embodiment of the present invention, in the composite electrolyte salt, the mass ratio of lithium hexafluorophosphate ($LiPF_6$), lithium difluorosulfonyl imide (LiFSI) and lithium sulfide salt is 1:(0.05~150):(0.005~10), preferably 1:(0.1~10):(0.07~3).

As one embodiment of the present invention, the lithium sulfide salt is preferably a combination of substituted sulfate and sulfonate structure lithium salts; in the lithium sulfide salt, the mass ratio of the substituted sulfate and sulfonate structure lithium salts is 1:(0.1~10), preferably 1:(0.15~5).

As one embodiment of the present invention, the molar ratio of S to P in the lithium sulfide salt is 0<S/P<=10.

As one embodiment of the present invention, the molar ratio of S to P in the composite electrolyte salt is $0<S/P \leq 10$, preferably $1.4<S/P\leq 6$. The molar ratio of S to P represents the proportion of sulfur-containing lithium salts in the lithium salt related to $LiPF_6$, influencing the percentage of sulfate, sulfite, or organic components with sulfate groups in the SEI after film formation; sulfur-containing components in the SEI film enhance the stability of the SEI film, thereby improving the thermal stability, cycling stability, and overall performance of the battery.

As one embodiment of the present invention, the secondary battery electrolyte further includes an organic solvent, which comprises cyclic carbonate solvents and non-equivalent length chained carbonate solvents. The cyclic carbonate solvents include one or more of ethylene carbonate (EC), propylene carbonate (PC), and difluorinated ethylene carbonate (DFEC). The non-equivalent length chained carbonate solvents include one or more of methyl ethyl carbonate (EMC), n1-fluoromethyl ethyl carbonate, and $n_2$-chloromethyl ethyl carbonate. Here, $n_1$ is the number of fluorine atoms substituted in the fluoromethyl ethyl carbonate, and $n_2$ is the number of chlorine atoms substituted in the chloromethyl ethyl carbonate.

As one embodiment of the present invention, the organic solvent also includes long-chain carbonate solvents. The long-chain carbonate solvents include dimethyl carbonate (DMC), diethyl carbonate (DEC), $n_3$-fluorodimethyl carbonate, $n_4$-fluorodipropyl carbonate, $n_5$-chlorodimethyl carbonate, and $n_6$-chlorodipropyl carbonate, either individually or in combination. Here, $n_3$ represents the number of fluorine atoms substituted in the fluorodimethyl carbonate, $n_4$ represents the number of fluorine atoms substituted in the difluorodipropyl carbonate, $n_5$ represents the number of chlorine atoms substituted in the chlorodimethyl carbonate, and $n_6$ represents the number of chlorine atoms substituted in the chlorodipropyl carbonate.

As one embodiment of the present invention, the secondary battery electrolyte further comprises additives, which include key additives; the key additives include one or more of vinylene carbonate (VC), vinyl sulfate (DTD) and methanesulfonic acid dimethyl ester (MMDS).

As one embodiment of the present invention, the additive further includes auxiliary additives, which include lithium difluorophosphate (LDFP), lithium di-fluoroborate (LiODFB), lithium di-fluoroborate phosphate (LiODFP), lithium di-borate (LiBOB), lithium perchlorate ($LiClO_4$), lithium fluosulfate ($LiSO_3F$), lithium nitrate ($LiNO_3$), lithium tetrafluoroborate phosphate (LiOTFP), tri-(tri-methylsilyl) phosphate ester (TMSP), tri-(tri-methylsilyl) borate ester (TMSB), 1,3-propanesulfonic acid lactone (PS), propenyl sulfonic acid lactone (PST), propenyl sulfite (TMS), vinylene carbonate (FEC), and tetraethylenecyclohexane (TS), either individually or in combination.

As one embodiment of the present invention, the content of the components in the electrolyte of the secondary battery is calculated according to the following formula:

$$0.25 \leq F = \frac{81.5 - W_{\text{cyclic}}\% \times 100 - W_{\text{non-equivalentchain}}\% \times 100}{(W_{\text{lithium salt}}\% \times 100) \times (W_{\text{key additives}}\% \times 100)} \leq 1.55$$

Among them, F value is the key characteristic ratio of the electrolyte, $W_{cyclic}\%$ represents the mass percentage of cyclic carbonate solvent in the electrolyte, $W_{non\text{-}equivalent\ chain}\%$ represents the mass percentage of non-equivalent length chained carbonate solvents in the electrolyte, $W_{lithium\ salt}\%$ represents the mass percentage of composite electrolyte salts in the electrolyte, and $W_{key\ additives}\%$ represents the mass percentage of key additivs in the electrolyte.

The present invention also provides a battery, including the secondary battery electrolyte.

Compared with the existing technology, the present invention has the following beneficial effects:

(1) The combination of $LiPF_6$, lithium sulfide salts, and LiFSI, where $LiPF_6$ serves as the traditional lithium salt with moderate stability and lower cost, but falls short in meeting current battery performance requirements. LiFSI exhibits superior hydrolytic stability, better thermal stability, and higher lithium migration capability, significantly reducing battery impedance and enhancing room-temperature cycling kinetics. Batteries with dense films and low impedance often have better room-temperature cycling performance. In the present invention, lithium sulfide salts include substituted sulfates and/or sulfonates, which also possess high lithium migration capabilities. Moreover, their anion clusters rich in S and O contribute to improving the composition of solid electrolyte interface (SEI) films and reducing film impedance. Additionally, the composite components of sulfates, sulfites, and organic SEI films containing sulfate groups exhibit good thermal stability, increasing the thermal decomposition temperature of SEI films and enhancing

battery safety. Therefore, the combined use of $LiPF_6$, lithium sulfide salts, and LiFSI significantly improves battery kinetics and high-temperature stability, thereby enhancing battery safety;

(2) Batteries using electrolytes with F value range have better high temperature storage performance; for electrolyte design, rapid and effective initial determination can be made.

## DETAILED DESCRIPTION

The following is a detailed description of the present invention with reference to specific embodiments. The examples provided below are implemented under the technical solution of the present invention, offering detailed implementation methods and specific operational processes that will help those skilled in the field to further understand the present invention. It should be noted that the scope of protection of the present invention is not limited to the embodiments described below; any adjustments and improvements made under the premise of the concept of the present invention also fall within the scope of protection of the present invention.

The polyvinylidene fluoride in the embodiments and comparative examples of the present invention is PVDF_5130.

The grade of polyvinylpyrrolidone in the embodiments and comparative examples of the present invention is PVP_30.

The sodium carboxymethyl cellulose used in the embodiments and comparative examples of the present invention is CMC_500.

### Example 1

In this embodiment, the battery electrochemical system used is lithium iron phosphate battery. In the electrolyte of this embodiment, the electrolyte includes:

The composite electrolyte salt consists of $LiPF_6$ + LiFSI + lithium tributanesulfonate ($LiC_4F_9SO_3$) + lithium ethanesulfonate ($LiCH_3SO_4$), where the $LiPF_6$ content is 6wt.%, the LiFSI content is 5wt.%, the $LiC_4F_9SO_3$ content is 1wt.%, and the $LiCH_3SO_4$ content is 1wt.%. The mass percentage of the composite electrolyte salt in the electrolyte is 13wt.% ($W_{lithium\ salt}$%), and the molar ratio of S to P in the composite electrolyte salt is S/P = 1.65;

The cyclic carbonate solvent includes EC 13 wt.%+PC13 wt.%, and the mass percentage of the cyclic carbonate solvent in the electrolyte 26wt.% ($W_{cyclic}$%);

The EMC of the long chain solvent is 12 wt.% ($W_{long\ chain}$%);

The key additive is 3.5 wt.% ($W_{key\ additive}$%), in which the key additive includes VC (ethyl vinyl carbonate) and DTD with a mass ratio of 3:0.5;

The auxiliary additive is 1.3 wt.%, in which the auxiliary additive includes LiODFB and FEC with a mass ratio of 0.5:0.8;

Isocarbonated solvent of equal length: the remainder (44.2wt.%), where the isocarbonated solvent of equal length includes DMC and DEC in a mass ratio of 1:1.

The components and contents of the electrolyte in embodiment 1 are shown in Table 1, and the F value of embodiment 1 is 0.956.

The process of preparing the battery in this embodiment is as follows:

First, the slurry is mixed. The ratio of cathode slurry is lithium iron phosphate: conductive carbon black (Super P): binder (polyvinylidene fluoride PVDF_5130): dispersant (polyvinylpyrrolidone PVP_30) = 100:2:2.5:0.5.

The ratio of anode slurry is graphite: conductive agent (Super P): binder (styrenebutadiene rubber (SBR)): binder (sodium carboxymethyl cellulose CMC_500): $H_2O$=100:2:2:0.8:99.

Then, the coating process is carried out, with the cathode slurry applied to the aluminum foil and the anode slurry applied to the copper foil, followed by drying and rolling. Next, roll pressing is performed, followed by cutting. After that, the cell core is wound using the prepared positive and anodes and separator, which uses a PP separator (12$\mu$m base film + 2$\mu$m $Al_2O_3$ ceramic layer + 1$\mu$m PVDF adhesive layer). The wound cell core is then hot-pressed and the top cover is welded, after which it is assembled into the case to form the dry cell.

After the dry cell is baked, the electrolyte is injected. After the battery is immersed, the formation and capacity sorting are carried out to obtain the finished cell.

### Example 2

This embodiment provides a secondary battery electrolyte, the composition selection and its content are shown in Table 1. The difference from Example 1 is that: the lithium sulfide salt only includes 2wt.% $LiC_4F_9SO_3$, does not include $LiCH_3SO_4$, and the molar ratio of S to P in the composite electrolyte salt is S/P=1.52.

**Example 3**

This embodiment provides a secondary battery electrolyte, the composition selection and its content are shown in Table 1. The difference from Example 1 is that: the lithium sulfide salt only includes 2wt.% $LiC_4F_9SO_3$,, does not include $LiC_4F_9SO_3$, and the molar ratio of S to P in the composite electrolyte salt is S/P=1.78.

**Example 4**

The difference between this embodiment and Example 1 is as follows: lithium trifluoromethanesulfonate ($LiCF_3SO_3$) replaces the sulfate, and lithium benzenesulfonate ($LiC_6H_5SO_4$) replaces the sulfonate structure lithium salt. The $LiPF_6$ content is 8wt.%, the LiFSI content is 8wt.%, the $LiCF_3SO_3$ content is 8wt.%, and the $LiC_6H_5SO_4$ content is 2wt.%. The mass percentage of the composite electrolyte salt in the electrolyte is 26wt.% ($W_{lithium\ salt}$%), and the content of the long-chain carbonate solvent is 31.2wt.%. The F value obtained in this embodiment is 0.478, and the molar ratio of S to P in the composite electrolyte salt is S/P = 2.81.

**Example 5**

The difference between this embodiment and Example 1 is as follows: instead of sulfates, lithium benzyl sulfate ($Li(C_6H_5)CH_2SO_3$), sulfonate structure lithium salt is used, specifically lithium sulfoxide ($LiC_3H_3N_2SO_4$), with $LiPF_6$ content being 3wt.%, LiFSI 5wt.%, $Li(C_6H_5)CH_2SO_3$ 0.5wt.%, $LiC_3H_3N_2SO$ 0.5wt.%, respectively. The mass percentage of the composite electrolyte salt in the electrolyte is 9wt.% ($W_{lithium\ salt}$%), and the content of the long-chain carbonate solvent is 48.2wt.%. The F value obtained from this embodiment is 1.381, and the molar ratio of S to P in the composite electrolyte salt is S/P = 3.00.

**Example 6**

This comparative example provides a secondary battery electrolyte, with component selection and their contents as shown in Table 1. The difference from Example 1 is that the $LiPF_6$ content is 2wt.%, the LiFSi content is 3wt.%, the $LiC_4F_9SO_3$ content is 1wt.%, and the $LiCH_3SO_4$ content is 1wt.%. The mass percentage of composite electrolyte salt in the electrolyte is 7wt.% ($W_{lithium\ salt}$%), and the content of isomeric chain carbonate solvent is 50.2wt.%. The F value obtained from this embodiment is 1.776, and the molar ratio of S to P in the composite electrolyte salt is S/P = 3.33.

**Comparative Example 1**

This comparative example provides a secondary battery electrolyte, the composition content is shown in Table 1, and the difference from Example 1 is that the lithium sulfide salt is replaced with an equal amount of lithium hexafluorophosphate, and the molar ratio of S to P in the composite electrolyte salt is S/P=1.02.

**Comparative Example 2**

This comparative example provides a secondary battery electrolyte, the composition content of which is shown in Table 1, and the difference from Example 1 is that the lithium sulfide salt is replaced with an equal amount of difluorosulfonyl imide lithium, and the molar ratio of S and P in the composite electrolyte salt is S/P=1.89.

**Comparative Example 3**

This comparative example provides a secondary battery electrolyte, the composition content is shown in Table 1, and the difference from Example 1 is that the lithium sulfide salt is replaced with an equal amount of lithium tetrafluoroborate ($LiBF_4$), and the molar ratio of S to P in the composite electrolyte salt is S/P=1.35.

Table 1

| Mass percentage of each component (wt.%) based on total mass of electrolyte | Examples | | | | | | Comparative Examples | | |
|---|---|---|---|---|---|---|---|---|---|
| | 1 | 2 | 3 | 4 | 5 | 6 | 1 | 2 | 3 |
| Lithium hexafluorophosphate | 6 | 6 | 6 | 8 | 3 | 2 | 8 | 6 | 6 |
| ($LiPF_6$) | | | | | | | | | |

(continued)

| Mass percentage of each component (wt.%) based on total mass of electrolyte | | Examples | | | | | | Comparative Examples | | |
|---|---|---|---|---|---|---|---|---|---|---|
| | | 1 | 2 | 3 | 4 | 5 | 6 | 1 | 2 | 3 |
| Lithium difluorosulfonyl imide (LiFSI) | | 5 | 5 | 5 | 8 | 5 | 3 | 5 | 7 | 5 |
| Sulfide lithium salts | Replace sulfate | 1 | 2 | | 8 | 0.5 | 1 | | | |
| | Sulfate structure lithium salt | 1 | | 2 | 2 | 0.5 | 1 | | | |
| Cyclic carbonate solvent | EC | 13 | 13 | 13 | 13 | 13 | 13 | 13 | 13 | 13 |
| | PC | 13 | 13 | 13 | 13 | 13 | 13 | 13 | 13 | 13 |
| Non-equivalent long chain carbonate solvent | EMC | 12 | 12 | 12 | 12 | 12 | 12 | 12 | 12 | 12 |
| Isopentyl carbonate solvent | DMC+DEC | remainder | remainder | remainder | remainder | remainder | remainder | remainder | remainder | remainder |
| Lithium tetrafluoroborate | 0 | 0 | 0 | 0 | 0 | 0 | 0 | 0 | 0 | 2 |
| Key additive | VC+DTD | 3.5 | 3.5 | 3.5 | 3.5 | 3.5 | 3.5 | 3.5 | 3.5 | 3.5 |
| Auxiliary additive | LiODFB +FEC | 1.3 | 1.3 | 1.3 | 1.3 | 1.3 | 1.3 | 1.3 | 1.3 | 1.3 |
| F value | | 0.956 | 0.956 | 0.956 | 0.478 | 1.381 | 1.776 | 0.956 | 0.956 | 0.956 |

The electrolyte of each embodiment and the comparative electrolyte were assembled into a pouch battery according to the steps of embodiment 1, and the performance was tested. The normal temperature cycle test steps are as follows:

1. 0.5C CC charging to 4.25V;
2. Set aside for 10min;
3. 1C discharge to 2.8V;
4. Set aside for 10min;
5. Repeat the above steps;
6. Check the capacity retention rate at 500 cycles.

The high temperature storage step test is as follows:

7. Charge the battery to 4.25V at 0.05C CCCV, cutoff at 0.5C;

8. Store the battery in a 60°C oven for 14 days;

9. Place the battery in room temperature environment for cooling for 4h;

The battery is discharged to 2.8V at 1C, and the remaining capacity is recorded as the test data of each embodiment and the comparative example as shown in Table 2.

Table 2

| | 500 cycle capacity retention rate (%) | Remaining capacity (%) |
|---|---|---|
| Example 1 | 96.12 | 86.9 |

(continued)

| | 500 cycle capacity retention rate (%) | Remaining capacity (%) |
|---|---|---|
| Example 2 | 93.06 | 84.4 |
| Example 3 | 91.71 | 82.8 |
| Example 4 | 96.03 | 86.2 |
| Example 5 | 94.77 | 84.9 |
| Example 6 | 87.52 | 78.6 |
| Comparative Example 1 | 82.65 | 72.5 |
| Comparative Example 2 | 86.19. | 74.2 |
| Comparative Example 3 | 80.44 | 71.3 |

From the comparative examples 1-3, it can be seen that when no lithium sulfide salt salt is added to the electrolyte, the capacity retention rate and high temperature storage performance at 500 cycles are decreased.

The above describes specific embodiments of the present invention. It should be understood that the present invention is not limited to the specific embodiments described above, and those skilled in the art can make various modifications or variations within the scope of the claims, which do not affect the essential content of the present invention.

## Claims

1. A secondary battery electrolyte, **characterized in that** the secondary battery electrolyte comprises a composite electrolyte salt; the composite electrolyte salt comprises lithium hexafluorophosphate, lithium difluorosulfonyl imide and a lithium sulfide salt; the lithium sulfide salt comprises substituted sulfate and/or sulfonate structure lithium salts;

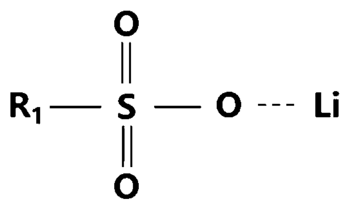

Formula 1

The structure of the compound that replaces sulfate is shown in formula 1, and $R_1$ includes one of alkyl, haloalkyl, hydroxyl, carboxyl, aldehyde, hydroxyethyl, carbonyl, aryl, benzyl, pyrazolyl, and imidazolyl;

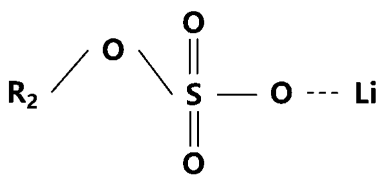

Formula 2

The structure of the sulfonate structure lithium salt is shown in formula 2; $R_2$ includes one of alkyl, unsaturated ethyl to hexyl, halogenated alkyl, hydroxyl, carboxyl, aldehyde, hydroxyethyl, carbonyl, aryl, benzyl, pyrazolyl, imidazole and so on.

2. The electrolyte for a secondary battery according to claim 1, **characterized in that** the lithium sulfide salt is a combination of substituted sulfate and sulfate structure lithium salts.

3. The electrolyte for secondary battery according to claim 1, **characterized in that** the molar ratio of S element and P

element in the composite electrolyte salt is 0<S/P<=10.

**4.** The electrolyte for a secondary battery according to claim 1, **characterized in that** the electrolyte for a secondary battery further comprises an organic solvent, the organic solvent comprising a cyclic carbonate solvent and a non-equivalent length chained carbonate solvent.

**5.** The electrolyte for a secondary battery according to claim 4, **characterized in that** the cyclic carbonate solvent comprises one or more of ethylene carbonate, propylene carbonate, and difluoromethyl carbonate; the non-equivalent length chained carbonate solvent comprises one or more of methyl ethyl carbonate, n1-fluoromethyl ethyl carbonate, and $n_2$-chloromethyl ethyl carbonate.

**6.** The electrolyte for a secondary battery according to claim 4, **characterized in that** the organic solvent further comprises an equal length chain carbonate solvent; the equal length chain carbonate solvent includes dimethyl carbonate, diethyl carbonate, $n_3$-fluorodimethyl carbonate, n4-fluorodisethyl carbonate, $n_5$-chlorodimethyl carbonate, or $n_6$-chlorodisethyl carbonate, either individually or in combination.

**7.** The electrolyte for a secondary battery according to claim 4, **characterized in that** the electrolyte for a secondary battery further comprises additives, said additives comprising key additives; said key additives comprising one or more of vinylene carbonate, ethyl sulfate and methanesulfonic acid dimethyl ester.

**8.** The electrolyte for a secondary battery according to claim 7, **characterized in that** the additive further comprises auxiliary additives, which include lithium difluorophosphate, lithium borate difluorocholate, lithium difluoroborate dihydrogen phosphate, lithium borate dihydrogen phosphate, lithium perchlorate, lithium fluosulfate, lithium nitrate, lithium tetrafluoroborate dihydrogen phosphate, tri(tert-methylsilyl) phosphate ester, tri(tert-methylsilane) borate ester, 1,3-propanesulfonic acid lactone, acrylate lactone, propenyl sulfite, vinylene carbonate, and tetraethylenesilane, either individually or in combination.

**9.** The electrolyte for a secondary battery according to claim 7, **characterized in that** the content of the components in the electrolyte for a secondary battery is calculated according to the following formula:

$$0.25 \le F = \frac{81.5 - W_{\text{cyclic}}\% \times 100 - W_{\text{non-equivalentchain}}\% \times 100}{(W_{\text{lithium salt}}\% \times 100) \times (W_{\text{key additives}}\% \times 100)} \le 1.55$$

Among them, F value is the key characteristic ratio of the electrolyte, $W_{cyclic}$% represents the mass percentage of cyclic carbonate solvent in the electrolyte, $W_{\text{non-equivalent chain}}$% represents the mass percentage of non-equivalent length chained carbonate solvents in the electrolyte, $W_{\text{lithium salt}}$% represents the mass percentage of composite electrolyte salt in the electrolyte, and $W_{\text{key additive}}$% represents the mass percentage of key additives in the electrolyte.

**10.** A battery, **characterized in that** the battery comprises a secondary battery electrolyte as claimed in any one of claims 1-9.

## INTERNATIONAL SEARCH REPORT

International application No.
**PCT/CN2024/124147**

**A. CLASSIFICATION OF SUBJECT MATTER**

H01M 10/0568(2010.01)i; H01M 10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, DWPI, CJFD: 电解液, 电解质, 盐, 六氟磷酸锂, 双氟磺酰亚胺锂, 硫, 锂, electrolyte, salt, lithium hexafluorophosphate, sulfur, lithium, sulfate, LiPF6, LiFSI, lithium bisfluorosulfonimide, sulfide, sulfonate

**C. DOCUMENTS CONSIDERED TO BE RELEVANT**

| Category* | Citation of document, with indication, where appropriate, of the relevant passages | Relevant to claim No. |
|---|---|---|
| PX | CN 117096450 A (REPT BATTERO ENERGY CO., LTD. et al.) 21 November 2023 (2023-11-21)<br>claims 1-10 | 1-10 |
| X | CN 109411816 A (HENAN FINELYTE NEW ENERGY TECHNOLOGY CO., LTD.) 01 March 2019 (2019-03-01)<br>embodiment 3 | 1 |
| Y | CN 109411816 A (HENAN FINELYTE NEW ENERGY TECHNOLOGY CO., LTD.) 01 March 2019 (2019-03-01)<br>description, embodiment 3, and paragraph [0005] | 1-10 |
| Y | CN 112349959 A (SHANSHAN ADVACED MATERIALS (QUZHOU) CO., LTD.) 09 February 2021 (2021-02-09)<br>description, paragraphs [0002]-[0056] | 1-10 |
| A | JP 2018172356 A (MITSUI CHEMICALS, INC.) 08 November 2018 (2018-11-08)<br>entire document | 1-10 |
| A | JP 2022150959 A (ASAHI KASEI CORP.) 07 October 2022 (2022-10-07)<br>entire document | 1-10 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 December 2024** | **31 December 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2024/124147**

| Patent document cited in search report | Publication date (day/month/year) | Patent family member(s) | Publication date (day/month/year) |
|---|---|---|---|
| CN 117096450 A | 21 November 2023 | CN 117096450 B | 15 March 2024 |
| CN 109411816 A | 01 March 2019 | None | |
| CN 112349959 A | 09 February 2021 | None | |
| JP 2018172356 A | 08 November 2018 | JP 2018172358 A | 08 November 2018 |
| | | JP 6879813 B2 | 02 June 2021 |
| | | JP 6879811 B2 | 02 June 2021 |
| | | JP 2018172357 A | 08 November 2018 |
| | | JP 6879812 B2 | 02 June 2021 |
| JP 2022150959 A | 07 October 2022 | None | |

Form PCT/ISA/210 (patent family annex) (July 2022)